# EUROPEAN PATENT SPECIFICATION

(11) **EP 4 670 955 B1**
(45) Date of publication and mention of the grant of the patent: **05.08.2026**
(21) Application number: 25183729.0
(22) Date of filing: 18.06.2025
(51) Int. Cl.: B29C 70/54, B29C 70/56, B29C 70/76, B60B 5/02, B60B 1/00, B60B 1/04, B60B 21/06, B29C 70/74, B29L 31/30

(54) **MANUFACTURING METHOD OF SPOKE ASSEMBLY**
HERSTELLUNGSVERFAHREN FÜR SPEICHENANORDNUNG
PROCÉDÉ DE FABRICATION D'UN ENSEMBLE DE RAYONS

(30) Priority: 28.06.2024 CN 202410866399
(43) Date of publication of application: 31.12.2025
(73) Proprietor: Xiamen Carbonking Composites Technology Co., Ltd., Xiamen, Fujian (CN)
(72) Inventor: LIU, Wurui, Xiamen, Fujian (CN); XIAO, Peilong, Xiamen, Fujian (CN)
(74) Representative: Balder IP Law, S.L.

(56) References cited:
- CN-A- 114 633 582
- US-A- 6 036 281

## Description

### TECHNICAL FIELD

The present invention relates to the technical field of carbon fiber spoke manufacturing, specifically to a manufacturing method of a spoke assembly.

### BACKGROUND

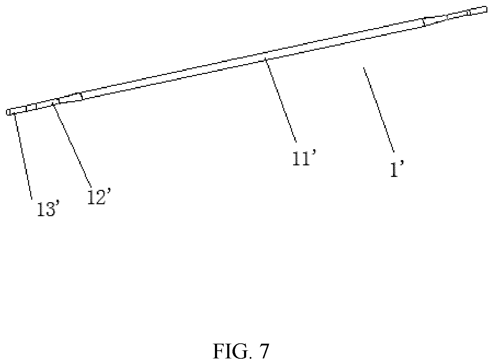

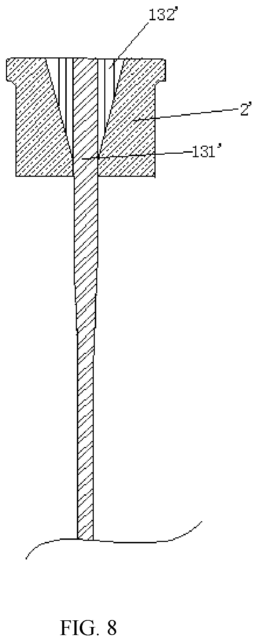

US6036281A discloses a combined bicycle wheel system designed to minimize rotational mass of the rim, while increasing the strength of the wheel both laterally and radially. The spoke assembly is mainly applied to the bicycle rim. The spoke assembly includes a spoke 1' and a nut cap and a cap head respectively installed at the two ends of the spoke 1'. As shown in FIGs. 7 and 8, the current structure of the spoke 1' includes a flat main body 11' located in the middle and cylindrical end portions located at both ends. An inner side section of the end portion is a cylindrical transition section 12', and an outer side section is processed to form a fixed joint 13'. The nut cap and the cap head respectively fixedly sleeve the fixed joints 13' at the two end portions, while the cylindrical transition section 12' is exposed on the cap head or outside the cap head.

The current manufacturing process of the spoke assembly is as follows: First, a preform made of cylindrical carbon fiber is heated and cured, such that a middle portion of the preform is heated and cured to form the flat main body 11'. Two ends of the preform are also cured to form cylindrical structures, the cylindrical structure including the cylindrical transition section 12' on a side closer to the middle of the spoke 1' and a fixed section on a side farther from the middle of the spoke 1'. Then, the cap head and the nut cap are respectively inserted onto the cylindrical transition sections 12' of the cylindrical structures at both ends of the spoke 1'. Subsequently, the fixed section is wrapped with a carbon fiber layer and heated to form the fixed joint 13'. The nut cap and the cap head are pulled outward toward the ends of the spoke 1', and through the limiting action of the fixed joints 13', the nut cap and the cap head respectively fixedly sleeve the fixed joints 13' at both ends of the spoke 1'.

The spoke assembly manufactured by the above method has the following shortcomings:
(1) The inner and outer carbon fiber layers wrapped sequentially at the position of the fixed joint 13' of the spoke 1' are heated and cured in two separate steps. Specifically, an inner layer 131' (that is, the cylindrical structure) and an outer layer 132' of the fixed joint are heated and cured sequentially, resulting in discontinuous or broken fiber distribution between the inner and outer carbon fiber layers of the fixed joint 13'. This makes it prone to delamination or slippage, posing certain safety hazards.
(2) Since the width of the main body 11' is greater than the diameter of the end portions, if the main body 11' is processed and formed first, a long length must be reserved for the cylindrical transition section 12' of the end portion to achieve temporary sleeving of the nut cap or the cap head. Only after the fixed section at the end portion is wrapped with the carbon fiber layer and cured to form the fixed joint 13' can the nut cap or cap head be withdrawn from the cylindrical transition section 12' and fixed outside the fixed joint 13'. This manufacturing method results in a long cylindrical transition section 12', and correspondingly, a relatively short main body 11'. Specifically, the length of the main body 11' accounts for a small proportion of the overall length of the spoke 1', which leads to large wind resistance during cycling, difficulty in breaking the wind, insufficient stability, and impacts on the user's riding efficiency and experience.

### SUMMARY

The present invention aims to provide a manufacturing method of a spoke assembly to solve the above-mentioned technical problems.

To achieve the above objective, the technical solution of the present invention according to claim 1 is:
The manufacturing method of a spoke assembly includes the following steps:
S1: providing a preform made of cylindrical carbon fiber;
S2: providing a first connector and a second connector, where the first connector and the second connector each have a conical through hole;
S3: enabling the first connector and the second connector to sleeve appropriate positions of a middle portion of the preform via the conical through holes, respectively;
S4: wrapping consecutive carbon fiber layers around two ends of the preform to form conical pillar sections;
S5: placing the preform into an end forming mold, and curing the conical pillar sections at the two ends of the preform at one time to form fixed joints, where fibers in an inner carbon fiber layer and an outer carbon fiber layer of the consecutive carbon fiber layers wrapped sequentially are distributed continuously along a taper of the fixed joints;
S6: applying pulling forces toward end sides to the first connector and the second connector, to force the first connector and the second connector to respectively sleeve the fixed joints at the two ends of the preform;
S7: wrapping a continuous carbon fiber layer on the middle portion of the preform, and placing an entirety of the preform into a main body forming mold for curing, such that the middle portion of the preform forms a main body and the preform is processed into a spoke; and
S8: applying the pulling forces toward the end sides to the first connector and the second connector again, to force the first connector and the second connector to sleeve the fixed joints more tightly than in the step S6, and ensuring an overall length of the spoke assembly meets a specified length, thereby forming a complete spoke assembly.

Preferably, in the step S7, the main body forming mold cures the middle portion of the preform into a flat main body.

Preferably, the spoke includes cylindrical transition sections located between the main body and the fixed joints, where the cylindrical transition sections are exposed outside the first connector or the second connector, and lengths of the cylindrical transition sections are smaller than lengths of the first connector and the second connector, respectively.

Preferably, the spoke further includes inclined transition sections located between the main body and the cylindrical transition sections, where a width of each of the inclined transition sections gradually decreases from the main body toward a corresponding one of the cylindrical transition sections, two ends of each of the inclined transition sections are a rounded end face and a flat surface, respectively, the rounded end face correspondingly matches the corresponding one of the cylindrical transition sections, and the flat surface correspondingly matches the main body.

Preferably, with respect to the spoke assembly, a direction toward a center of the spoke assembly is defined as an inner side, and a direction away from the center of the spoke assembly is defined as an outer side, where the conical through holes gradually expand from inside outward, the fixed joints are conical fixed joints gradually expanding from inside outward, and the conical through holes and the conical fixed joints are correspondingly engaged in a limiting manner.

Preferably, the first connector is a nut cap connected to and cooperating with a rim, and the second connector is a cap head connected to and cooperating with a hub.

The present invention has the following beneficial effects:
(1) With the use of the end forming mold, the conical pillar sections at both ends of the preform are cured at one time to form fixed joints, which means that the inner layer of the fixed joint and the outer layer of the fixed joint of the spoke are heated and cured together, enabling the fibers in the inner carbon fiber layer and the outer carbon fiber layer of the consecutive carbon fiber layers wrapped sequentially at the fixed joints to be continuously distributed along the taper of the fixed joints without disconnection. This makes the fixed joint less prone to delamination or slippage, making it safer and more reliable.
(2) It is unnecessary to reserve a long length for the cylindrical transition section at the end of the spoke, and correspondingly, the main body can be processed relatively longer, making the length of the main body account for a larger proportion of the overall length of the spoke. Moreover, since the main body is flat, the main body being longer indicates smaller wind resistance during cycling, making it easier to break the wind. Through experimental testing, the wind-breaking performance of the spoke assembly manufactured by the method of the present invention is improved by 20-30% compared with that of the spoke assembly manufactured by conventional methods, with good stability, enhancing the user's riding efficiency and experience.

### BRIEF DESCRIPTION OF DRAWINGS

FIG. 1 is a schematic diagram of assembly of a spoke assembly according to an embodiment of the present invention.
FIG. 2 is an exploded schematic diagram of the spoke assembly according to an embodiment of the present invention.
FIG. 3 is a front view according to an embodiment of the present invention.
FIG. 4 is a cross-sectional view at A-A in FIG. 3.
FIG. 5 is a schematic structural diagram of a cap head according to an embodiment of the present invention.
FIG. 6 is a cross-sectional view of a fixed joint of a spoke after one-time molding according to an embodiment of the present invention.
FIG. 7 is a schematic diagram of appearance of a spoke in the prior art.
FIG. 8 is a cross-sectional view of a fixed joint of the spoke in the prior art after secondary molding.

Reference numerals in the figure:
In the prior art: 1'. spoke, 11'. main body, 12'. cylindrical transition section, 13'. fixed joint, 131'. inner layer of the fixed joint, 132'. outer layer of the fixed joint, and 2'. cap head.
In the present invention: 1. spoke, 11. main body, 12. inclined transition section, 13. cylindrical transition section, 14. fixed joint, 2. nut cap, 3. cap head, and 4. through hole.

### DESCRIPTION OF EMBODIMENTS

To further illustrate the embodiments, the present invention provides accompanying drawings. These drawings are part of the disclosure of the present invention, primarily used to illustrate the embodiments and, in conjunction with the relevant descriptions in the specification, to explain the operating principles of the embodiments. With reference to these contents, those of ordinary skill in the art should be able to understand other possible implementations and the advantages of the present invention. The components in the drawings are not drawn to scale, and similar component symbols are typically used to represent similar components.

In the description of the present invention, unless otherwise specified, the term "multiple" means two or more; the terms "upper," "lower," "left," "right," "inner," "outer," "front," "rear," "head," "tail," and the like indicating orientation or positional relationships are based on the orientation or positional relationships shown in the drawings, solely for the convenience of describing the present invention and simplifying the description, and do not indicate or imply that the referred device or element must have a specific orientation, be constructed or operated in a specific orientation, and thus cannot be construed as limiting the present invention. Furthermore, the terms "first," "second," "third," and the like are used for descriptive purposes only and cannot be construed as indicating or implying relative importance.

In the description of the present invention, it should be noted that, unless otherwise expressly specified and limited, the terms "joining" and "connection" should be understood in a broad sense. For example, it may be a fixed connection, a detachable connection, or an integral connection; it may be a mechanical connection or an electrical connection; or it may be a direct connection or an indirect connection through an intermediate medium. For those of ordinary skill in the art, the specific meanings of the above terms in the present invention can be understood based on specific circumstances.

For convenience of description, with respect to a spoke assembly, a direction toward a center of the spoke assembly is defined as an inner side, and a direction away from the center of the spoke assembly is defined as an outer side.

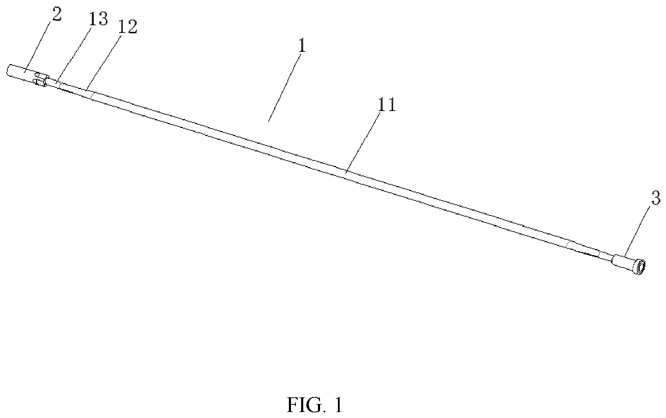

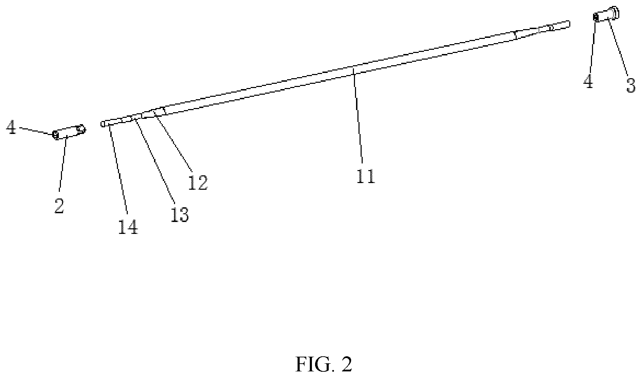

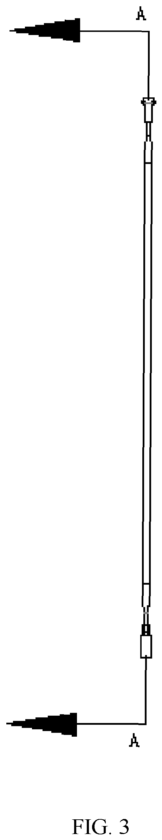

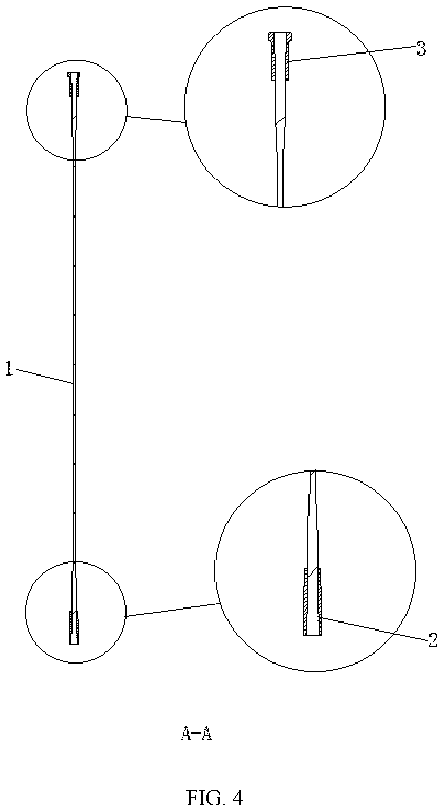

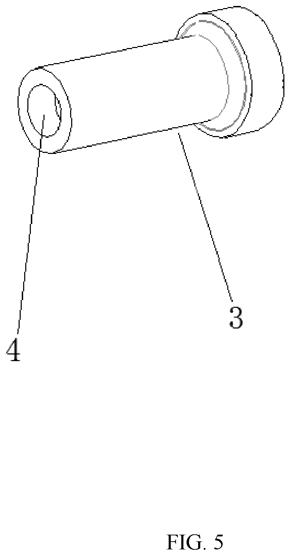

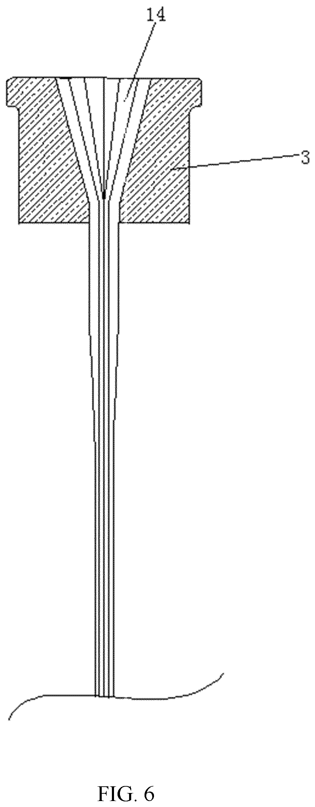

As shown in FIGs. 1 to 6, according to an embodiment of the present invention, a manufacturing method of a spoke assembly is provided, including the following steps:
S1: Provide a preform made of cylindrical carbon fiber.
S2: Provide a first connector and a second connector, where the first connector and the second connector each have a conical through hole 4.
S3: Enable the first connector and the second connector to sleeve appropriate positions of a middle portion of the preform via the conical through holes 4, respectively.
S4: Wrap consecutive carbon fiber layers around two ends of the preform to form conical pillar sections.
S5: Place the preform into an end forming mold, and cure the conical pillar sections at the two ends of the preform at one time to form fixed joints 14, where fibers in an inner carbon fiber layer and an outer carbon fiber layer of the consecutive carbon fiber layers wrapped sequentially at the fixed joints 14 are distributed continuously along a taper of the fixed joints.
S6: Apply pulling forces toward end sides to the first connector and the second connector, to force the first connector and the second connector to respectively sleeve the fixed joints 14 at the two ends of the preform.
S7: Wrap a continuous carbon fiber layer on the middle portion of the preform, and place an entirety of the preform into a main body forming mold for curing, such that the middle portion of the preform forms a main body 11 and the preform is processed into a spoke.
S8: Apply the pulling forces toward the end sides to the first connector and the second connector again, to force the first connector and the second connector to sleeve the fixed joints 14 more tightly than in the step S6, and ensure an overall length of the spoke assembly meets a specified length, thereby forming a complete spoke assembly.

In the step S7, the main body forming mold cures the middle portion of the preform into a flat main body.

The first connector is a nut cap 2 connected to and cooperating with a rim, and the second connector is a cap head 3 connected to and cooperating with a hub.

The spoke 1 includes cylindrical transition sections 13 located between the main body 11 and the fixed joints 14, where the cylindrical transition sections 13 are exposed outside the first connector or the second connector, and lengths of the cylindrical transition sections 13 are smaller than lengths of the first connector and the second connector, respectively.

The manufacturing method of a spoke assembly of the present invention has the following advantages:
(1) With the use of the end forming mold, the conical pillar sections at both ends of the preform are cured at one time to form fixed joints 14, which means that the inner layer of the fixed joint 14 and the outer layer of the fixed joint 14 of the spoke 1 are heated and cured together, enabling the fibers in the inner carbon fiber layer and the outer carbon fiber layer of the consecutive carbon fiber layers wrapped sequentially at the fixed joints 14 to be continuously distributed along the taper of the fixed joints 14 without disconnection. This makes the fixed joint 14 less prone to delamination or slippage, making it safer and more reliable.
(2) The nut cap 2 and the cap head 3 can temporarily sleeve appropriate positions in the middle portion of the preform. After the two ends of the preform are wrapped with consecutive carbon fiber layers to form the conical pillar sections and heated and cured at one time to form the fixed joints 14, the nut cap 2 and the cap head 3 are pulled toward two ends, to respectively sleeve the fixed joints 14 at two ends of the preform. Then, a continuous carbon fiber layer is wrapped on the middle portion of the preform, and an entirety of the preform is placed into the main body forming mold for curing, such that the middle portion of the preform is heated and cured at one time to form the flat main body 11, thereby processing the preform into the spoke 1. The second pulling force toward one end side is applied to the nut cap 2 or the cap head 3, forcing the nut cap 2 or cap head 3 to sleeve the fixed joint 14 more tightly than in the step S6, and it is ensured that the overall length of the spoke assembly meets a specified length, thus forming a complete spoke assembly. This method eliminates the need to reserve a long length for the cylindrical transition section 13 at the end of the spoke 1, and correspondingly, the main body 11 can be processed relatively longer, making the length of the main body 11 account for a larger proportion of the overall length of the spoke 1. Moreover, since the main body 11 is flat, the main body 11 being longer indicates smaller wind resistance during cycling, making it easier to break the wind. Through experimental testing, the wind-breaking performance of the spoke assembly manufactured by the method of the present invention is improved by 20-30% compared with that of the spoke assembly manufactured by conventional methods, with good stability, enhancing the user's riding efficiency and experience.

Certainly, in other cases, the main body may alternatively be processed into shapes other than flat, such as cylindrical or diamond-shaped.

In this embodiment, with respect to the spoke assembly, the direction toward the center of the spoke assembly is defined as the inner side, and the direction away from the center of the spoke assembly is defined as the outer side. The conical through holes 4 gradually expand from inside outward, and the fixed joints 14 are conical fixed joints gradually expanding from inside outward. The conical through holes and the conical fixed joints are correspondingly engaged in a limiting manner, thereby enabling the nut cap 2 and the cap head 3 to respectively fixedly sleeve the fixed joints 14 at the ends of the spoke 1. Since the rim and the hub respectively exert outward pulling forces on the nut cap 2 and the cap head 3, the conical structure of the conical through hole and conical fixed joint makes the force on the nut cap 2 and the cap head 3 more stable and the installation more secure.

In this embodiment, the spoke 1 further includes inclined transition sections 12 located between the main body 11 and the cylindrical transition sections 13, where a width of each of the inclined transition sections 12 gradually decreases from the main body 11 toward a corresponding one of the cylindrical transition sections 13, two ends of each of the inclined transition sections 12 are a rounded end face and a flat surface, respectively, the rounded end face correspondingly matches the corresponding one of the cylindrical transition sections 13, and the flat surface correspondingly matches the main body 11, ensuring a smoother and more stable transition between the main body 11 and the cylindrical transition section 13.

Although the present invention has been specifically shown and described with reference to preferred implementations, those skilled in the art should understand that various changes in form and detail made to the present invention, within the scope of the present invention as defined by the appended claims, fall within the protection scope of the present invention.

## Claims

1. A manufacturing method of a spoke assembly, **characterized by** comprising the following steps:
S1: providing a preform made of cylindrical carbon fiber;
S2: providing a first connector and a second connector, wherein the first connector and the second connector each have a conical through hole (4);
S3: enabling the first connector and the second connector to sleeve appropriate positions of a middle portion of the preform via the conical through holes (4), respectively;
S4: wrapping consecutive carbon fiber layers around two ends of the preform to form conical pillar sections;
S5: placing the preform into an end forming mold, and curing the conical pillar sections at the two ends of the preform at one time to form fixed joints (14), wherein fibers in an inner carbon fiber layer and an outer carbon fiber layer of the consecutive carbon fiber layers wrapped sequentially are distributed continuously along a taper of the fixed joints (14);
S6: applying pulling forces toward end sides to the first connector and the second connector, to force the first connector and the second connector to respectively sleeve the fixed joints (14) at the two ends of the preform;
S7: wrapping a continuous carbon fiber layer on the middle portion of the preform, and placing an entirety of the preform into a main body forming mold for curing, such that the middle portion of the preform forms a main body (11) and the preform is processed into a spoke (1); and
S8: applying the pulling forces toward the end sides to the first connector and the second connector again, to force the first connector and the second connector to sleeve the fixed joints (14) more tightly than in the step S6, and ensuring an overall length of the spoke assembly meets a specified length, thereby forming a complete spoke assembly.

2. The manufacturing method of a spoke assembly according to claim 1, **characterized in that** in the step S7, the main body forming mold cures the middle portion of the preform into a flat main body (11).

3. The manufacturing method of a spoke assembly according to claim 1, **characterized in that** the spoke (1) comprises cylindrical transition sections (13) located between the main body (11) and the fixed joints (14), wherein the cylindrical transition sections (13) are exposed outside the first connector or the second connector, and lengths of the cylindrical transition sections (13) are smaller than lengths of the first connector and the second connector, respectively.

4. The manufacturing method of a spoke assembly according to claim 3, **characterized in that** the spoke (1) further comprises inclined transition sections (12) located between the main body (11) and the cylindrical transition sections (13), wherein a width of each of the inclined transition sections (12) gradually decreases from the main body (11) toward a corresponding one of the cylindrical transition sections (13), two ends each of the inclined transition sections (12) are a rounded end face and a flat surface, respectively, the rounded end face correspondingly matches the corresponding one of the cylindrical transition sections (13), and the flat surface correspondingly matches the main body (11).

5. The manufacturing method of a spoke assembly according to claim 1, **characterized in that**, with respect to the spoke assembly, a direction toward a center of the spoke assembly is defined as an inner side, and a direction away from the center of the spoke assembly is defined as an outer side, wherein the conical through holes (4) gradually expand from inside outward, the fixed joints (14) are conical fixed joints gradually expanding from inside outward, and the conical through holes and the conical fixed joints are correspondingly engaged in a limiting manner.

6. The manufacturing method of a spoke assembly according to claim 1, **characterized in that** the first connector is a nut cap (2) connected to and cooperating with a rim, and the second connector is a cap head (3) connected to and cooperating with a hub.

## Patentansprüche

1. Verfahren zum Herstellen einer Speichenanordnung, **dadurch gekennzeichnet, dass** es die folgenden Schritte umfasst:
S1: Bereitstellen eines Vorformlings aus zylindrischer Kohlenstofffaser;
S2: Bereitstellen eines ersten Verbinders und eines zweiten Verbinders, wobei der erste Verbinder und der zweite Verbinder jeweils eine konische Durchgangsbohrung (4) aufweisen;
S3: Ermöglichen, dass der erste Verbinder und der zweite Verbinder jeweils über die konischen Durchgangsbohrungen (4) an den entsprechenden Positionen eines mittleren Abschnitts des Vorformlings aufgesteckt werden;
S4: Wickeln aufeinanderfolgender Kohlenstofffaserschichten um beide Enden des Vorformlings herum, um konische Säulenabschnitte zu bilden;
S5: Einlegen des Vorformlings in eine Endform und gleichzeitiges Aushärten der konischen Säulenabschnitte an den beiden Enden des Vorformlings, um feste Gelenke (14) zu bilden, wobei Fasern in einer inneren Kohlenstofffaserschicht und einer äußeren Kohlenstofffaserschicht der nacheinander gewickelten aufeinanderfolgenden Kohlenstofffaserschichten kontinuierlich entlang einer Verjüngung der festen Gelenke (14) verteilt sind;
S6: Aufbringen von Zugkräften in Richtung der Endseiten auf den ersten Verbinder und den zweiten Verbinder, um den ersten Verbinder und den zweiten Verbinder zu zwingen, die festen Gelenke (14) an den beiden Enden des Vorformlings jeweils aufzustecken;
S7: Wickeln einer durchgehenden Kohlenstofffaserschicht auf den mittleren Abschnitt des Vorformlings und Einlegen des gesamten Vorformlings in eine Hauptkörper-Form zum Aushärten, so dass der mittlere Abschnitt des Vorformlings einen Hauptkörper (11) bildet und der Vorformling zu einer Speiche (1) verarbeitet wird; und
S8: erneutes Aufbringen der Zugkräfte in Richtung der Endseiten auf den ersten Verbinder und den zweiten Verbinder, um den ersten Verbinder und den zweiten Verbinder zu zwingen, die festen Gelenke (14) fester als in Schritt S6 aufzustecken, und Sicherstellen, dass eine Gesamtlänge der Speichenanordnung einer vorgegebenen Länge entspricht, wodurch eine vollständige Speichenanordnung gebildet wird.

2. Verfahren zum Herstellen einer Speichenanordnung nach Anspruch 1, **dadurch gekennzeichnet, dass** in Schritt S7 die Hauptkörper-Form den mittleren Abschnitt des Vorformlings zu einem flachen Hauptkörper (11) aushärtet.

3. Verfahren zum Herstellen einer Speichenanordnung nach Anspruch 1, **dadurch gekennzeichnet, dass** die Speiche (1) zylindrische Übergangsabschnitte (13) umfasst, die sich zwischen dem Hauptkörper (11) und den festen Gelenken (14) befinden, wobei die zylindrischen Übergangsabschnitte (13) außerhalb des ersten Verbinders oder des zweiten Verbinders freiliegen und die Längen der zylindrischen Übergangsabschnitte (13) jeweils kleiner als die Längen des ersten Verbinders und des zweiten Verbinders sind.

4. Verfahren zum Herstellen einer Speichenanordnung nach Anspruch 3, **dadurch gekennzeichnet, dass** die Speiche (1) ferner geneigte Übergangsabschnitte (12) umfasst, die sich zwischen dem Hauptkörper (11) und den zylindrischen Übergangsabschnitten (13) befinden, wobei sich eine Breite jedes der geneigten Übergangsabschnitte (12) vom Hauptkörper (11) hin zu einem entsprechenden der zylindrischen Übergangsabschnitte (13) allmählich verringert, wobei beide Enden jeder der geneigten Übergangsabschnitte (12) jeweils eine abgerundete Endfläche und eine flache Fläche aufweisen, wobei die abgerundete Endfläche entsprechend zu dem entsprechenden einen der zylindrischen Übergangsabschnitte (13) passt und die flache Fläche entsprechend zu dem Hauptkörper (11) passt.

5. Verfahren zum Herstellen einer Speichenanordnung nach Anspruch 1, **dadurch gekennzeichnet, dass** in Bezug auf die Speichenanordnung eine Richtung zu einem Zentrum der Speichenanordnung als Innenseite und eine Richtung vom Zentrum der Speichenanordnung weg als Außenseite definiert ist, wobei sich die konischen Durchgangsbohrungen (4) von innen nach außen allmählich erweitern, wobei die festen Gelenke (14) konische feste Gelenke sind, die sich von innen nach außen allmählich erweitern, und die konischen Durchgangsbohrungen und die konischen festen Gelenke entsprechend begrenzend ineinandergreifen.

6. Verfahren zum Herstellen einer Speichenanordnung nach Anspruch 1, **dadurch gekennzeichnet, dass** der erste Verbinder eine mit einer Felge verbundene und mit dieser zusammenwirkende Mutternkappe (2) ist und der zweite Verbinder ein mit einer Nabe verbundener und mit dieser zusammenwirkender Kappenkopf (3) ist.

## Revendications

1. Procédé de fabrication d'un ensemble rayon, **caractérisé en ce qu'**il comprend les étapes suivantes consistant à :
S1 : fournir une préforme fait de fibre de carbone cylindrique ;
S2 : fournir un premier élément de liaison et un second élément de liaison, dans lequel le premier élément de liaison et le second élément de liaison ont chacun un trou traversant conique (4) ;
S3 : permettre au premier élément de liaison et au second élément de liaison de manchonner respectivement sur des positions appropriées d'une partie centrale de la préforme, au moyen des trous traversants coniques (4) ;
S4 : enrouler des couches de fibre de carbone consécutives autour deux extrémités de la préforme afin de former des sections de colonne coniques ;
S5 : mettre la préforme dans un moule de formage d'extrémité, et durcir simultanément les sections de colonne coniques au niveau des deux extrémités de la préforme afin de former des joints fixes (14), dans lequel des fibres d'une couche de fibre de carbone interne et d'une couche de fibre de carbone externe des couches de fibre de carbone consécutives enroulées séquentiellement sont réparties de manière continue le long d'un cône des joints fixes (14) ;
S6 : appliquer des forces de traction vers des côtés d'extrémité sur le premier élément de liaison et le second élément de liaison, afin de forcer le premier élément de liaison et le second élément de liaison à manchonner respectivement sur les joints fixes (14) au niveau des deux extrémités de la préforme ;
S7 : enrouler une couche de fibre de carbone continue sur la partie centrale de la préforme, puis mettre l'ensemble de la préforme dans un moule de formage de corps principal pour le durcissement, de sorte que la partie centrale de la préforme forme un corps principal (11) et que la préforme soit transformée en un rayon (1) ;
S8 : appliquer à nouveau les forces de traction vers les côtés d'extrémité sur le premier élément de liaison et le second élément de liaison, afin de forcer le premier élément de liaison et le second élément de liaison à manchonner sur les joints fixes (14) de façon plus serrée qu'à l'étape S6, et garantir qu'une longueur totale de l'ensemble rayon corresponde à une longueur spécifiée, formant ainsi un ensemble rayon complet.

2. Procédé de fabrication d'un ensemble rayon selon la revendication 1, **caractérisé en ce qu'**à l'étape S7, le moule de formage de corps principal durcit la partie centrale de la préforme en un corps principal (11) plan.

3. Procédé de fabrication d'un ensemble rayon selon la revendication 1, **caractérisé en ce que** le rayon (1) comprend des sections de transition cylindriques (13) situées entre le corps principal (11) et les joints fixes (14), dans lequel les sections de transition cylindriques (13) sont exposées à l'extérieur du premier élément de liaison ou du second élément de liaison, et des longueurs des sections de transition cylindriques (13) sont inférieures à des longueurs du premier élément de liaison et du second élément de liaison, respectivement.

4. Procédé de fabrication d'un ensemble rayon selon la revendication 3, **caractérisé en ce que** le rayon (1) comprend en outre des sections de transition inclinées (12) situées entre le corps principal (11) et les sections de transition cylindriques (13), dans lequel une largeur de chacune des sections de transition inclinées (12) diminue progressivement à partir du corps principal (11) vers la section de transition cylindrique correspondante des sections de transition cylindriques (13), deux extrémités de chacune des sections de transition inclinées (12) sont respectivement une face d'extrémité arrondie et une surface plane, la face d'extrémité arrondie correspondant en conséquence à la section de transition cylindrique correspondante des sections de transition cylindriques (13), et la surface plane correspondant en conséquence au corps principal (11).

5. Procédé de fabrication d'un ensemble rayon selon la revendication 1, **caractérisé en ce que**, par rapport à l'ensemble rayon, une direction vers un centre de l'ensemble rayon est définie comme côté interne, et une direction opposée au centre de l'ensemble rayon est définie comme côté externe, dans lequel les trous traversants coniques (4) s'élargissent progressivement à partir de l'intérieur vers l'extérieur, les joints fixes (14) sont des joints fixes coniques s'élargissant progressivement de l'intérieur vers l'extérieur, et les trous traversants coniques et les joints fixes coniques viennent en conséquence en prise de manière limitée.

6. Procédé de fabrication d'un ensemble rayon selon la revendication 1, **caractérisé en ce que** le premier élément de liaison est un capuchon d'écrou (2) relié à et coopérant avec une jante, et le second élément de liaison est une tête de capuchon (3) reliée à et coopérant avec un moyeu.
